# EUROPÄISCHE PATENTSCHRIFT

(11) **EP 1 508 255 B1**
(45) Veröffentlichungstag und Bekanntmachung des Hinweises auf die Patenterteilung: **14.07.2010**
(21) Anmeldenummer: 03755091.0
(22) Anmeldetag: 02.05.2003
(51) Int. Cl.: H04B 1/04

(54) **SCHALTUNGSANORDNUNG ZUM UMSCHALTEN EINES MOBILFUNKSENDERS ZWISCHEN ZWEI MODULATIONSBETRIEBSARTEN**
CIRCUIT ARRANGEMENT FOR SWITCHING A MOBILE RADIO TRANSMITTER BETWEEN TWO MODULATION MODES
CIRCUIT POUR COMMUTER UN EMETTEUR RADIOTELEPHONIQUE MOBILE ENTRE DEUX MODES DE MODULATION

(30) Priorität: 29.05.2002 EP 02011966
(43) Veröffentlichungstag der Anmeldung: 23.02.2005
(73) Patentinhaber: Palm, Inc., Sunnyvale, CA 94085-2801 (US)
(72) Erfinder: HERZBERG, Ralf, 47918 Tönisvorst (DE); NAGEL, Jörg, 47799 Krefeld (DE)
(74) Vertreter: Samson & Partner
(86) Internationale Anmeldenummer: PCT/EP2003/004624
(87) Internationale Veröffentlichungsnummer: WO 2003/101133

(56) Entgegenhaltungen:
- EP-A- 1 162 754
- WO-A-98/00929
- DE-A- 10 056 472
- DE-A- 10 056 472
- BERLAND C ET AL: "A NEW DUAL MODE GSM/EDGE TRANSCEIVER USING MODULATION LOOP" 30TH EUROPEAN MICROWAVE CONFERENCE PROCEEDINGS. PARIS, OCT. 3 - 5, 2000, PROCEEDINGS OF THE EUROPEAN MICROWAVE CONFERENCE, LONDON: CMP, GB, Bd. 3 OF 3 CONF. 30, 5. Oktober 2000 (2000-10-05), Seiten 399-402, XP001061061 ISBN: 0-86213-212-6

## Beschreibung

Die Erfindung bezieht sich auf eine Schaltungsanordnung zum Regeln eines Betriebs eines Senders eines mobilen Kommunikationsendgerätes, der für die

Modulationsbetriebsarten EDGE und GMSK ausgelegt ist, mit
- einem Leistungsverstärker, der ein Ausgangssignal für eine Antenne des mobilen Kommunikationsendgerätes liefert,
- einem Phasenregler, der einen Phasenkomparator, dem ein Sollsignal für das Ausgangssignal des Leistungsverstärkers zugeführt wird, und einen spannungsgesteuerten Oszillator zur Anpassung der Phasenlage des Ausgangssignals des Leistungsverstärkers aufweist, zum Regeln der Phasenlage des Ausgangssignals des Leistungsverstärkers,
- einem Amplitudenregler, der einen Amplitudenkomparator, dem das Sollsignal für das Ausgangssignal des Leistungsverstärkers zugeführt wird, und einen von einer Batterie gespeisten Batteriespannungsmodulator zum Anpassen der Amplitude des Ausgangssignals des Leistungsverstärkers aufweist, zum Regeln der Amplitude des Ausgangssignals des Leistungsverstärkers und
- einer Rückkopplungsleitung zum Rückkoppeln eines aktuellen Messwerts für das Ausgangssignal des Leistungsverstärkers zu dem Phasenkomparator und dem Amplitudenkomparator, die einen von einem Basisbandchip mittels eines Stellsignals gesteuerten einstellbaren Verstärker zum Einstellen einer Ausgangsleistung der Antenne aufweist.

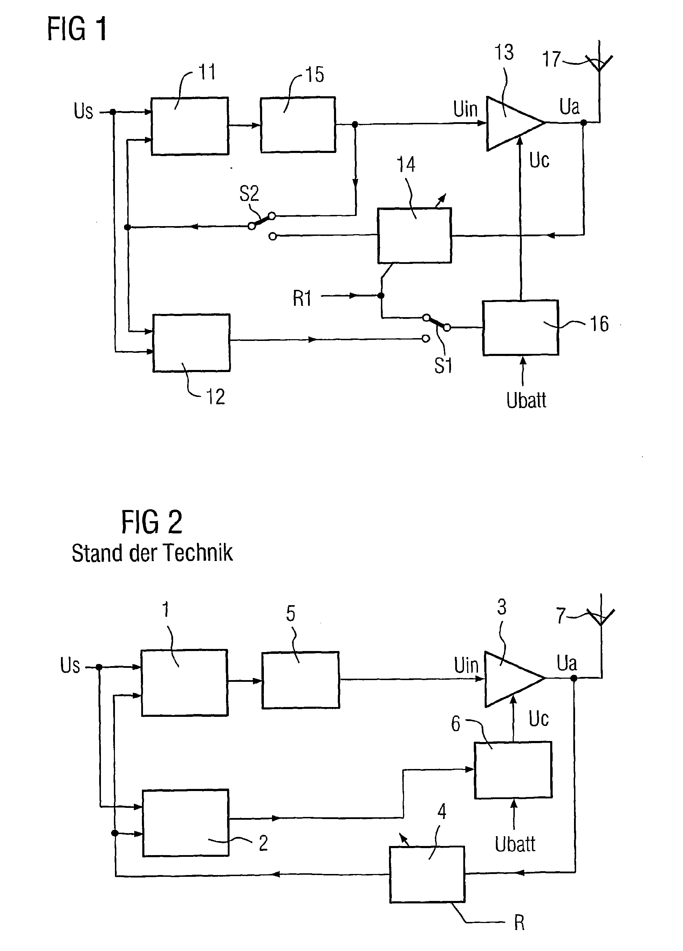

Eine solche Schaltungsanordnung wird im Stand der Technik sowohl für die Modulationsbetriebsart EDGE als auch für die Modulationsbetriebsart GMSK verwendet, wobei die Schaltungsanordnung in bezug auf die Modulationsbetriebsarten EDGE und GMSK nicht variabel ausgestaltet ist. Die Funktionsweise der bekannten Schaltungsanordnung wird nachstehend anhand der Figur 2 erläutert. Dabei ist hervorzuheben, dass ein mit einer solchen Schaltungsanordnung ausgestatteter Sender allgemein als sog. "Polar Loop Sender" bezeichnet wird.

Eine funktionsmäßig der Schaltungsanordnung gemäß Figur 2 recht ähnliche oder sogar im Wesentlichen entsprechende Polar Loop-Sendeschaltung ist aus der DE 100 56 472 A1 bekannt. Bei dieser Sendeschaltung wird ein gesendetes Signal und ein Rückkopplungssignal in ihre Polar-Komponenten, Phase und Amplitude, zerlegt, und die Komponente miteinander zur Realisierung einer Phasen- und Amplitudenmodulation verglichen. Es ist ein von einem Amplitudenmodulationssignal gesteuerter Amplitudenmodulator vorgesehen, der einem spannungsgesteuerten Oszillator nachgeschaltet ist. Im Rückkopplungspfad ist ein Verstärker vorgesehen, der das Ausgangssignal des Amplitudenmodulators dämpft.

Wie der hiesigen Figur 2 zu entnehmen ist, wird bei der dort gezeigten Schaltungsanordnung ein Sollspannungssignal Uₛ sowohl einem Eingang eines Phasenkomparators 1 als auch einem Eingang eines Amplitudenkomparators 2 zugeleitet. An jeweils zweiten Eingängen des Phasenkomparators 1 und des Amplitudenkomparators 2 liegt eine Ausgangsspannung Uₐ an, und zwar unter Zwischenschaltung eines einstellbaren Verstärkers 4, der eine Dämpfung für die Ausgangsspannung Uₐ und damit einen Verstärkungsfaktor Uₐ/Uₛ für den Amplitudenregelkreis bestimmt. Mit der Dämpfung des regelbaren Verstärkers 4 lässt sich so die an die Antenne gelieferte Ausgangsleistung einstellen.

Der einstellbare Verstärker 4 wird von einem Basisbandchip eines mobilen Kommunikationsendgerätes, zu dem die Schaltungsanordnung gehört, gesteuert, wobei ein an dem einstellbaren Verstärker 4 anliegendes Stellsignal R aufgrund einer Leistungsanforderung einer Gegenstelle des mobilen Kommunikationsendgerätes, wie einer Basisstation eines Mobilfunknetzes, zu wählen ist.

Ein Ausgangssignal des Phasenkomparators 1 wird einem spannungsgesteuerten Oszillator 5 zugeleitet, dessen Ausgangssignal Uᵢₙ an einem Eingang des Leistungsverstärkers 3 anliegt und eine Anpassung der Phasenlage des Ausgangssignals Uₐ an die Phasenlage der Sollspannung Uₛ bewirkt.

Ein Ausgangssignal des Amplitudenkomparators 2, bei dem es sich in der Praxis meist um einen integrierenden Fehlerverstärker handelt, liegt an einem Eingang eines Batteriespannungsmodulators 6 an, der von einer Batterie U_{batt} bzw. einem Akku des mobilen Kommunikationsendgerätes gespeist wird. Ein Ausgangssignal des Batteriespannungsmodulators 6 dient zur Anpassung der Amplitude des Spannungssignals Uₐ an die Amplitude des Sollsignals Uₛ, und zwar unter Berücksichtigung der Dämpfung durch den einstellbaren Verstärker 4.

Bei der in Figur 2 dargestellten Schaltungsanordnung verläuft eine Rückkopplungsleitung von dem Ausgang des Leistungsverstärkers 3 für die Ausgangsspannung Uₐ über den einstellbaren Verstärker 4 zu den jeweiligen Eingängen des Phasenkomparators 1 und des Amplitudenkomparators 2.

Der Batteriespannungsmodulator 6 beeinflusst unmittelbar eine Versorgungsspannung U_{c} des Leistungsverstärkers 3 und damit eine Hüllkurve für das Ausgangsspannungssignal Uₐ des Leistungsverstärkers 3.

Die oben erläuterte Schaltungsanordnung besitzt keinerlei Variabilität zur Optimierung ihres Betriebs an verschiedene Modulationsbetriebsarten, wie EDGE bzw. GMSK. Diese Modulationsbetriebsarten sind dem Fachmann auf dem Gebiet der Mobilfunktechnik ohne weiteres bekannt. Für etwaige Einzelheiten wird auf das Fachbuch "Mobilfunknetze und ihre Protokolle 1" von B. Walke, dritte Auflage, erschienen im Verlag B. G. Teubner, 2001, verwiesen.

Die beschriebene Schaltungsanordnung nach dem Stand der Technik, die zur Linearisierung des Leistungsverstärkers 3 dient, weist bei einer Verwendung sowohl für die EDGE-Modulationsbetriebsart als auch die GMSK-Modulationsbetriebsart folgenden Nachteil auf: Um eine fehlerfreie Funktion des Senders sicher zu stellen, muss die von dem Leistungsverstärker 3 an eine Antenne 7 gelieferte Leistung Pₐ und damit die Ausgangsspannung Uₐ immer unter seiner maximal lieferbaren Ausgangsleistung Pₘₐₓ liegen. Wenn beispielsweise die maximal lieferbare Ausgangsspannung Uₘₐₓ in Folge eines Abfalls der verfügbaren Akkuspannung unter den aufgrund der Regelung zu wählenden Wert für die Ausgangsspannung Uₐ sinkt, erreicht der Amplitudenregler seinen Regelanschlag. In diesem unerwünschten Betriebszustand können Regelkreisinstabilitäten und Sättigungseffekte zu einer Verschlechterung des Schalt- und Modulationsspektrums führen. Auch das Auftreten von Zeitgebungsproblemen ist möglich, denn nach Erreichen seines Regelanschlags benötigt der Amplitudenkomparator in dem Fall, wenn die Ausgangsleistung Pₐ beispielsweise am Ende eines Sendezeitschlitzes heruntergefahren werden soll, eine gewisse Zeit, um den gesättigten Betrieb zu verlassen. Sowohl der Eintritt als auch das Verlassen des Regelanschlages führen somit zu unerwünschten Effekten im zeitlichen Verlauf der Ausgangsleistung Pₐ und damit auch im Schaltspektrum, wobei sogar die vorgeschriebenen Leistungsgrenzen für einschlägige Mobilfunkstandards verletzt werden können.

Zur Vermeidung des Regelanschlages wurde bisher durch entsprechende Dimensionierung des Leistungsverstärkers 3 eine genügend hohe Reserve für die verfügbare Ausgangsleistung Pₘₐₓ realisiert. Dies führt jedoch zu hohen Bauteilkosten und/oder frühzeitiger Abschaltung des mobilen Kommunikationsendgerätes durch schnelleren Verbrauch der Akkumulatorkapazität. Letzterem Nachteil kann nur durch Verwendung eines größeren und teureren Akkus begegnet werden.

Aus der WO 98/00929 ist gemäß deren Figur 1 eine umschaltbare Schaltungsanordnung eines Senders bekannt, mit einer Phasenmodulations-Regelschleife und einer Amplitudenmodulations-Regelschleife. Ein Schalter ermöglicht, entweder ein Rückkopplungssignal der Phasenmodulations-Regelschleife oder ein Rückkopplungssignal der Amplitudenmodulations-Regelschleife zu einem Mischer der der Amplitudenmodulations-Regelschleife vorgeschalteten Phasenmodulations-Regelschleife zurückzukoppeln. Die Amplitudenregelung eines Leistungsverstärkers der Amplitudenmodulations-Regelschleife erfolgt stets auf Grundlage deren Rückkopplungssignals und eines Amplitudenreferenzsignals.

Die umschaltbare Schaltungsanordnung gemäß Figur 1 der WO 98/00929 wird in der WO 98/00929 als Stand der Technik für in den Figuren 2 bis 5 erläuterte Lösungen genannt, deren Grundstruktur in Figur 2 der WO 98/00929 angegeben ist. Es ist bei diesen Lösungen eine Phasenmodulations-Regelschleife vorgesehen, welche ein Signal einem Leistungsverstärker zuführt. Dieses Signal, das Phasenmodulationsinformation und die richtige Kanalfrequenz enthält, wird durch den Verstärker verstärkt und einer Antenne zugeführt. Ein Stromverbrauch des Leistungsverstärkers wird durch ein Leistungsdetektor erfasst und ein der Stromaufnahme proportionales Signal wird einer Verstärkerregelschaltung zugeführt, welche dieses Signal mit einem Amplitudenkomponentensignal und einem Steuerwert vergleicht. Die Verstärkerregelschaltung gibt ein Steuersignal an den Leistungsverstärker aus.

Ausgehend hiervon liegt der Erfindung die Aufgabe zugrunde, die eingangs genannte Schaltungsanordnung derart weiterzubilden, dass sie für die beiden Modulationsbetriebsarten EDGE und GMSK wirtschaftlich effizienter ist.

Diese Aufgabe wird bei der eingangs genannten Schaltungsanordnung dadurch gelöst, dass ein Umschalter vorgesehen ist, der derart verschaltet ist, dass er einen Eingang des Batteriespannungsmodulators in einer ersten Stellung für die EDGE-Betriebsart mit einem Ausgang des Amplitudenkomparators verbindet und dass in einer zweiten Stellung für die GMSK-Betriebsart das Stellsignal des einstellbaren Verstärkers unmittelbar an dem Eingang des Batteriespannungsmodulators anliegt.

Der Einsatz des Umschalters bewirkt somit, dass im GMSK-Betrieb des Senders der Amplitudenregler nicht zum Einsatz kommt. Vielmehr wird das Stellsignal für den einstellbaren Verstärker unmittelbar dem Batteriespannungsmodulator zugeführt, so dass es als Stellsignal für den Batteriespannungsmodulator dient. Auf diese Weise wird im GMSK-Betrieb ein Erreichen des Regelanschlags für den Amplitudenregler wirksam vermieden. Der Verzicht auf die Amplitudenregelung kann deshalb in Kauf genommen werden, weil bei der GMSK-Modulationsbetriebsart eine Amplitudenmodulation nicht vorgesehen ist, vielmehr ausschließlich eine Phasenmodulation.

Der einstellbare Verstärker kann ein Herauf-, oder ein Herabsetzen der Ausgangsspannung und damit der Ausgangsleistung des Leistungsverstärkers bewirken, wobei die Einstellung des einstellbaren Verstärkers mit ausreichender Genauigkeit zu steuern ist.

Bevorzugt ist ein zweiter Umschalter vorgesehen, der derart verschaltet ist, dass er den Eingang des Phasenkomparators in einer ersten Stellung mit dem Ausgang des Leistungsverstärkers und in einer zweiten Stellung mit einem Ausgang des Oszillators verbindet. Dabei ist es für die EDGE-Betriebsart bevorzugt, dass der zweite Umschalter seine erste Stellung einnimmt, während für die GMSK-Betriebsart der zweite Umschalter seine zweite Stellung einnehmen sollte. Dem liegt zugrunde, dass im EDGE-Betrieb eine Amplitudenmodulation vorliegt. Da ein Phasengang des Leistungsverstärkers üblicher Weise amplitudenabhängig ist, wird das Ausgangssignal stark phasenverzerrt. Um diesen Fehler zu beseitigen, muss der Phasenfehler der Ausgangsspannung Uₐ von dem Phasenregler korrigiert werden.

Im GSMK-Betrieb ist diese Korrektur nicht erforderlich. Hier genügt es, das Ausgangssignal des Oszillators zurückzuführen.

Dies hat den Vorteil, dass der Phasenregler durch seine Entkopplung gegenüber dem Leistungsverstärker nunmehr vergleichsweise unempfindlicher gegenüber von der Antenne empfangenen Störsignalen ist, wodurch sonst erforderliche zusätzliche Maßnahmen zur Unterdrückung von Störsignalen, wie zuschaltbare Dämpfungsglieder in einer Leitung von dem Leistungsverstärker zu der Antenne, entfallen können.

Ein weiterer Vorteil der Erfindung insgesamt liegt darin, dass der bereits im Stand der Technik vorgesehene Batteriespannungsmodulator als Stellglied für die Ausgangsleistung des Leistungsverstärkers verwendet wird. So kann durch Vorsehen der beiden Umschalter ohne weiteren Aufwand an Bauteilen gegenüber der bekannten Schaltungsanordnung eine jeweils optimierte Sender-Betriebsart für die beiden Modulationsbetriebsarten GMSK und EDGE gewählt werden können.

Die Erfindung wird nachfolgend anhand eines Ausführungsbeispiels noch näher erläutert. Es zeigen:
Figur 1 eine Schaltungsanordnung eines Polar-Loop-Senders, der zwischen einer EDGE-Modulationsbetriebsart und einer GMSK-Modulationsbetriebsart umschaltbar ist.
Figur 2 eine Schaltung eines Polar-Loop-Senders nach dem Stand der Technik und

Die Figur 2 ist zur Veranschaulichung des Standes der Technik, von dem die Erfindung ausgeht, bereits oben eingehend erläutert worden.

Die erfindungsgemäße Schaltungsanordnung enthält dieselben Hauptkomponenten wie die Schaltungsanordnung nach dem Stand der Technik, nämlich einen Phasenkomparator 11, einen Amplitudenkomparator 12, einen Leistungsverstärker 13, einen einstellbaren Verstärker 14, einen spannungsgesteuerten Oszillator 15, einen Batteriespannungsmodulator 16 und eine Antenne 17.

Sowohl dem Phasenkomparator 11 als auch dem Amplitudenkomparator 12 wird als Eingangssignal eine Sollspannung U_{S} zugeführt. Außerdem wird ein aktueller Messwert für die Ausgangsspannung Uₐ des Leistungsverstärkers 13 grundsätzlich auf jeweilige Eingänge des Phasenkomparators 11 und des Amplitudenkomparators 12 rückgekoppelt. Nach der Erfindung ist gegenüber dem Stand der Technik jedoch ein Umschalter S1 vorgesehen, der sich zwischen einer ersten und einer zweiten Stellung umschalten lässt.

Die Stellung des Schalters S1 entscheidet darüber, welches Signal an einem Eingang des Batteriespannungsmodulators 16 vorliegt. Im GMSK-Betrieb nimmt der Schalter S1 seine erste Stellung ein, bei der ein Stellsignal R1 für den einstellbaren Verstärker 14 über den Schalter S1 unmittelbar an einem Eingang des Batteriespannungsmodulators 16 anliegt, so dass in diesem Betriebsfall eine Amplitudenregelung für das Ausgangssignal Uₐ des Leistungsverstärkers 13 nicht vorliegt. Vielmehr wirkt das Stellsignal R1 für den einstellbaren Verstärker 14 unmittelbar als Stellsignal für den Batteriespannungsmodulator 16. Auf diese Weise wird ein Regelanschlag des Amplitudenreglers vermieden, da eine Amplitudenreglung im GMSK-Betrieb nicht stattfindet.

Wenn der Sender, der Bestandteil eines mobilen Kommunikationsendgerätes ist, mit der EDGE-Modulationsbetriebsart betrieben wird, nimmt der Schalter S1 seine zweite Stellung ein, bei der ein Ausgangssignal des Amplitudenkomparators 12 unmittelbar an dem Eingang des Batteriespannungsmodulators 16 anliegt. Bei dieser Stellung des Umschalters S1 wird die Amplitudenregelung genauso genutzt, wie bei der Schaltungsanordnung nach Figur 2, die dem Stand der Technik entspricht.

Des weiteren ist in der Schaltungsanordnung nach Figur 1 ein zweiter Umschalter S2 vorgesehen, der darüber entscheidet, welches Signal an demjenigen Eingang des Phasenkomparators 11 anliegt, dessen Signalwert mit dem Sollspannungssignal Uₛ zu vergleichen ist. Bei der EDGE-Modulationsbetriebsart nimmt der Umschalter S2 eine erste Stellung ein, bei der die Ausgangsspannung bzw. das Ausgangssignal des Leistungsverstärkers 13 auf die jeweiligen Eingänge des Phasenkomparators 11 und des Amplitudenkomparators 12, bei dem es sich um einen integrierenden Fehlerverstärker handelt, rückgekoppelt wird, so dass eine Regelung für die Phase des Ausgangsspannungssignals Uₐ mittels des spannungsgesteuerten Oszillators 5 in derselben Weise erfolgt, wie bei der Schaltungsanordnung nach Figur 1, die dem Stand der Technik entspricht.

Demgegenüber nimmt der Umschalter S2 bei der GMSK-Modulationsbetriebsart eine zweite Stellung ein, bei der ein Ausgangssignal des Oszillators 15 unmittelbar auf einen Eingang des Phasenkomparators 11 rückgekoppelt wird, wobei das an diesem Eingang anliegende Signal mit dem Spannungssollsignal Uₛ mittels des Phasenkomparators 1 verglichen wird.

Angesichts vorstehender Erläuterungen wird ersichtlich, dass in Figur 1 die Umschalter S1 und S2 in solchen Stellungen gezeigt sind, wie sie für einen Betrieb des Senders erforderlich sind, bei dem eine GMSK-Modülationsbetriebsart vorliegt.

Im Vergleich zu der Schaltungsanordnung nach dem Stand der Technik ist bei der Schaltungsanordnung nach Figur 1 ebenfalls eine Rückkopplungsleitung vorgesehen, die von einem Ausgang des Leistungsverstärkers 13 über den einstellbaren Verstärker 14 und dem Umschalter S2 zu den betreffenden Eingängen des Phasenkomparators 11 und des Amplitudenkomparators 12 verläuft. Bei der erfindungsgemäßen Schaltungsanordnung ist eine zusätzliche Rückkopplungsleitung vorgesehen, die von einem Ausgang des Oszillators 15 zu dem Umschalter S2 verläuft. Eine weitere zusätzliche Leitung, in deren Verlauf das Stellsignal für den einstellbaren Verstärker (VGA; variable gain amplifier) 14 (EDGE) bzw. den Batteriespannungsmodulator 16 (GMSK) zugeführt wird, verläuft von dem einstellbaren Verstärker 14 zu dem Umschalter S1.

Die Vorteile der vorliegenden Erfindung werden besonders ersichtlich, wenn die in den jeweiligen Standards für GSMK und EDGE festgelegten Ausgangsleistungen berücksichtigt werden. Die maximale Ausgangsleistung für GMSK beträgt + 33 dBm. Der betreffende Wert für die EDGE-Modulationsbetriebsart beträgt + 30 dBm_{PEP}. Insofern hat ein Multimode-Gerät, das sowohl für den GMSK- als auch für den EDGE-Betrieb vorgesehen ist, für den EDGE-Betrieb bereits eine Ausgangsleistungsreserve von 3 dB, was in der Regel für eine fehlerfreie Funktion des Senders im EDGE-Betrieb ausreichend ist.

Eine noch höhere Reserve für die GMSK-Betriebsart wird nunmehr dadurch vermieden, dass der Umschalter S1 vorgesehen ist, so dass der Batteriespannungsmodulator 16 unmittelbar durch ein Stellsignal R1 des einstellbaren Verstärkers 14 angesteuert wird. Die Einstellung der Ausgangsleistung des Senders kann durch einfache Steuerung des Batteriespannungsmodulators 16 mit ausreichender Genauigkeit realisiert werden.

## Patentansprüche

1. Schaltungsanordnung zum Regeln eines Betriebs eines Senders eines mobilen Kommunikationsendgerätes, der für die Modulationsbetriebsarten EDGE und GMSK ausgelegt ist, mit
- einem Leistungsverstärker (13), der ein Ausgangssignal für eine Antenne (17) des mobilen Kommunikationsendgerätes liefert,
- einem Phasenregler, der einen Phasenkomparator (11), dem ein Sollsignal für das Ausgangssignal des Leistungsverstärkers (13) zugeführt wird, und einen spannungsgesteuerten Oszillator (15)zur Anpassung der Phasenlage des Ausgangssignals des Leistungsverstärkers (13) aufweist, zum Regeln der Phasenlage des Ausgangssignals des Leistungsverstärkers (13),
- einem Amplitudenregler, der einen Amplitudenkomparator (12), dem das Sollsignal für das Ausgangssignal des Leistungsverstärkers (13) zugeführt wird, und einen von einer Batterie gespeisten Batteriespannungsmodulator (16) zum Anpassen der Amplitude des Ausgangssignals des Leistungsverstärkers aufweist, zum Regeln der Amplitude des Ausgangssignals des Leistungsverstärkers (13) und
- einer Rückkopplungsleitung zum Rückkoppeln eines aktuellen Messwerts für das Ausgangssignal des Leistungsverstärkers (13) zu dem Phasenkomparator (11) und dem Amplitudenkomparator (12), die einen von einem Basisbandchip mittels eines Stellsignals (R1) gesteuerten einstellbaren Verstärker (14) zum Einstellen einer Ausgangsleistung der Antenne aufweist,
**dadurch gekennzeichnet,**
**dass** ein Umschalter (S1) vorgesehen ist, der derart verschaltet ist, dass er einen Eingang des
Batteriespannungsmodulators (16) in einer ersten Stellung für die EDGE-Betriebsart mit einem Ausgang des Amplitudenkomparators (12) verbindet und dass in einer zweiten Stellung für die GMSK-Betriebsart das Stellsignal (R1) des einstellbaren Verstärkers (14) unmittelbar an dem Eingang des Batteriespannungsmodulators (16) anliegt.

2. Schaltungsanordnung nach Anspruch 1,
**dadurch gekennzeichnet,**
**dass** der einstellbare Verstärker (14) zum Herauf- /Herabsetzen der Amplitude des Ausgangssignals des Leistungsverstärkers (13) vorgesehen ist.

3. Schaltungsanordnung nach einem der Ansprüche 1 oder 2,
**dadurch gekennzeichnet,**
**dass** ein zweiter Umschalter (S2) vorgesehen ist, der derart verschaltet ist, dass er den Eingang des Phasenkomparators (11) in einer ersten Stellung mit dem Ausgang des Leistungsverstärkers (13) und in einer zweiten Stellung mit einem Ausgang des Oszillators (15) verbindet.

4. Schaltungsanordnung nach Anspruch 3,
**dadurch gekennzeichnet,**
**dass** in der EDGE-Betriebsart der zweite Umschalter (S2) seine erste Stellung einnimmt.

5. Schaltungsanordnung nach einem der Ansprüche 3 oder 4,
**dadurch gekennzeichnet,**
**dass** in der GMSK-Betriebsart der zweite Umschalter (S2) seine zweite Stellung einnimmt.

## Claims

1. A circuit arrangement for controlling operation of a sender of a mobile communication terminal device adapted for the modulation operation techniques EDGE and GMSK, comprising:
- a power amplifier (13) which provides an output signal for an antenna (17) of the mobile communication terminal device,
- a phase controller having a phase comparator (11), to which a set signal for the output signal of the power amplifier (13) is fed, and a voltage controlled oscillator (15) for adaptation of the phase of the output signal of the power amplifier (13) for controlling the phasing of the output signal of the power amplifier (13),
- an amplitude controller having an amplitude comparator (12), to which the set signal for the output signal of the power amplifier (13) is fed, and a battery power modulator (16) powered by a battery for adapting the amplitude of the output signal of the power amplifier (13) and
- a feedback line for feeding back a current measured value for the output signal of the power amplifier (13) to the phase comparator (11) and the amplitude comparator (12), having an adjustable amplifier (14) controlled by a base band chip by means of a control signal (R1) for adjusting an output power of the antenna,
**characterized in that**
a switch (S1) is provided which is interconnected in such a way that it connects an input of the battery voltage modulator (16) in a first position for the EDGE operation mode with an output of the amplitude comparator (12) and that in a second position for the GMSK operation mode the control signal (R1) of the adjustable amplifier (14) is directly in contact with the input of the battery voltage modulator (16).

2. The circuit arrangement according to claim 1,
**characterized in that**
the adjustable amplifier (14) is provided for raising/lowering the amplitude of the output signal of the power amplifier (13).

3. The circuit arrangement according to any one of the claims 1 or 2,
**characterized in that**
a second switch (S2) is provided which is interconnected in such a way that it connects the input of the phase comparator (11) in a first position with the output of the power amplifier (13) and in a second position with an output of the oscillator (15).

4. The circuit arrangement according to claim 3,
**characterized in that**
in the EDGE operation mode, the second switch (S2) takes its first position.

5. The circuit arrangement according to any one of the claims 3 or 4,
**characterized in that**
in the GMSK operation mode, the second switch (S2) takes its second position.

## Revendications

1. Arrangement de circuit pour régler une opération d'un émetteur d'un dispositif terminal de communication qui est adapté aux modes d'opération de modulation EDGE et GMSK, comprenant
- un amplificateur de puissance (13) fournissant un signal de sortie pour l'antenne (17) du dispositif terminal de communication mobile,
- un régulateur de phase comportant un comparateur de phase (11), auquel un signal de consigne pour le signal de sortie de l'amplificateur de puissance (13) est fourni, et un oscillateur (15) réglé par tension pour l'ajustement de condition de phase du signal de sortie de l'amplificateur de puissance (13), pour régler de la condition de phase du signal de sortie de l'amplificateur de puissance (13),
- un régulateur d'amplitude comportant un comparateur d'amplitude (12), auquel le signal de consigne est fourni pour le signal de sortie de l'amplificateur de puissance (13), et un modulateur de tension de batterie (16) alimenté par une batterie, pour régler l'amplitude du signal de sortie de l'amplificateur de puissance (13) et
- un conduit de rétroaction pour coupler rétroactivement une valeur mesurée courante pour le signal de sortie de l'amplificateur de puissance (13) au comparateur de phase (11) et au comparateur d'amplitude (12), comportant un amplificateur (14) ajustable réglé par une puce de bande de base au moyen d'un signal de réglage (R1) pour ajuster une puissance de sortie de l'antenne,
**caractérisé en ce qu'**
un commutateur (S1) est prévu qui est tellement interconnecté qu'il connecte une sortie du modulateur de tension de batterie (16) dans une première position pour le mode d'opération EDGE avec une sortie du comparateur d'amplitude (12) et que dans une deuxième position pour le mode d'opération GMSK le signal de réglage (R1) de l'amplificateur ajustable (14) est directement en contact avec l'entrée du modulateur de tension de batterie (16).

2. Arrangement de circuit selon la revendication 1,
**caractérisé en ce que**
l'amplificateur ajustable (14) est prévu pour élever/baisser l'amplitude du signal de sortie de l'amplificateur de puissance (13).

3. Arrangement de circuit selon l'une des revendications 1 ou 2,
**caractérisé en ce qu'**
un deuxième commutateur (S2) est prévu qui est tellement interconnecté qu'il connecte l'entrée du comparateur de phase (11) dans une première position avec la sortie de l'amplificateur de puissance (13) et dans une deuxième position avec une sortie de l'oscillateur (15).

4. Arrangement de circuit selon la revendication 3,
**caractérisé en ce que**
dans le mode d'opération EDGE, le deuxième commutateur (S2) prend sa première position.

5. Arrangement de circuit selon l'une des revendications 3 ou 4,
**caractérisé en ce que**
dans le mode d'opération GMSK, le deuxième commutateur (S2) prend sa deuxième position.
